(19) Europäisches Patentamt
European Patent Office
Office européen des brevets

(11) Publication number: **0 280 440 A1**

(12) **EUROPEAN PATENT APPLICATION**

(21) Application number: 88301109.0

(51) Int. Cl.4: B05D 1/02

(22) Date of filing: 10.02.88

(30) Priority: 11.02.87 US 13510

(43) Date of publication of application: 31.08.88 Bulletin 88/35

(84) Designated Contracting States: AT BE DE FR GB IT NL

(71) Applicant: BETZ EUROPE, INC.
4636 Somerton Road
Trevose Pennsylvania 19047(US)

(72) Inventor: Purnell, Deborah Lillian
6302 Gardenia Street
Philadelphia Pennsylvania 19144(US)

(74) Representative: Gore, Peter Manson et al
W.P. THOMPSON & CO. Coopers Building
Church Street
Liverpool L1 3AB(GB)

(54) **Paint spray booth detackification method.**

(57) A paint spray booth detackification method wherein a clay material and a polyacrylic acid or water soluble salt form thereof are admitted to the water wash system of the paint spray booth to detackify and coagulate oversprayed paint, the polyacrylic and or water soluble salt thereof being present in an amount of up to about 1 weight %, based upon the weight of the clay.

EP 0 280 440 A1

# PAINT SPRAY BOOTH DETACKIFICATION METHOD

This invention relates to an improved method for treating paint wastes and paint oversprays encountered in paint spray booths or any areas where these wastes and oversprays exist in water systems.

Spray painting of automobile bodies, truck engines, appliances, and other industrial goods is customarily carried out in enclosed areas called paint spray booths (PSB). These booths act both to contain any fumes or oversprayed paint and to reduce the chances of dust contamination. These booths vary in size, but are somewhat basic in their design and operation. A typical booth would thus consist of a work area, a water curtain, a back section with mist eliminators, and a sump.

The units to be painted generally pass through the work area while an air flow makes the oversprayed paint contact either the sump water or the spray from the water curtain. The air is scrubbed with recirculated water at the water curtain, passes through the mist eliminators, and is removed by an exhaust fan.

Because approximately one-half of all paint sprayed does not reach its intended article, a significant concentration of paint builds in the system and agglomeration can occur. The resultant mass is a sticky, tacky material which can plug the mist eliminators, shower heads, and even recirculating pumps. When this happens, scrubbing efficiency decreases, leading to potentially hazardous conditions of unchecked paint emissions being discharged into the atmosphere. Such conditions may also present severe safety hazards to paint spray booth operators.

This process involves other problems. These tacky organic deposits are subject to bacterial growth and fungi proliferation, which conditions generate corrosion and odor problems. In addition, the paint solids which are recirculated can form suspensions in the water. They remain tacky and create expensive separation and disposal problems.

These problems show, therefore, the desirability to treat PSB water systems so as to reduce or prevent as much as possible the agglomeration and deposition of oversprayed paint on critical PSB operation parts; to render the resultant sludge non-tacky and easily removable; and to provide a water quality such that it can be recycld for use in the system.

Another problem associated with paint detackification and separation from the paint spray booth water wash system is the disposal cost associated with removal of the resulting paint sludge. For economical reasons, it is highly desirable to provide a PSB chemical treatment that results in a reduced or low volume sludge so that disposal costs may accordingly be minimized.

The prior art is replete with clay-based chemical treatment approaches for paint spray booth detackification and separation. For instance, the use of a combination of esters of aliphatic dibasic acids and bentonite clay is suggested in US-A-2 362 964. Similarly, US-A-3 515 575 mentions the use of absorbents such as talc, chalk, starch, bentonite, clay, collodial silica, calcium silicate, magnesium silicate, aluminium silicate, as well as antifoams in general in known techniques, although the invention is directed to polycationic or polyanionic polymers to perform the detackification function.

Other prior art patent specifications disclosing the use of bentonite clays in this environment include US-A-4 220 456; US-A-2 267 426; US-A-4 185 970; US-A-4 125 476; and US-A-4 380 495.

Despite the advantages of the above-noted prior art approaches, the inventor of the invention to which the present Application is directed faced the problem of developing a versatile detackification product and method capable of performing the intended detackification function for a wide degree of paint products including water-based paints, solvent-based paints, lacquers, enamels and the newer high solids base coat/clear coat paints.

Of further importance was the need to improve upon traditional clay-based detackification approaches in the provision of a resulting lower volume sludge which can be economically removed from the work site.

The above and other problems in the field of paint spray booth chemical treatments are addressed by the present invention. Briefly, the invention comprises using, as the chemical treatment, which is admitted to the booth water wash system, a specific combination of a clay material and a polyacrylic acid polymer or water soluble salt thereof. The polyacrylic acid polymer is present in the clay in a minor but critical amount, more particularly an amount in a range of (based on the weight of clay) from trace amounts to about 1.0% by weight. Quite surprisingly, addition of this critical amount of polyacrylic acid polymer to the clay matrix in a lower volume of paint sludge. Even though the volume of resulting paint sludge is lower than for conventional clay paint spray booth detackification treatments, detackification efficacy is comparable to or better than traditional approaches. It is critical that the polyacrylic acid or water soluble salt form thereof be present in the clay matrix within an amount of from trace quantities to about 1 weight % based upon the weight of the clay. Quite surprisingly, if more than 1.0% by weight of the polyacrylic acid component is

present, the detackification efficacy of the treatment is significantly diminished.

As used herein, "polyacrylic acid polymer" denotes any polymer that, when admitted to the water system, will convert, through hydrolysis or other mechanisms, to a polymer consisting essentially of acrylic acid repeat units.

Paint, as used herein, is a broad-based term used to describe the coating applied to a given object. Paints are normally composed of a film former (the resin which forms the coating), a carrier (water or solvent), pigments (for colour), and additives such as, for example, biocides, drying agents, and viscosity modifiers. In general, the carrier is used to classify the paint type: eithe water base or solvent base. Technically, if the paint forms its coating by evaporation of the solvent without chemical reaction, it is a lacquer. If the coating is formed via cross-linking, it is an enamel.

The term "clay" is unusual in that it has decidedly different meanings to technologists in different fields. One standard definition for the term is that of a "naturally occurring sediment (including that obtained by alteration in situ by supergene and hydrothermal processes) or sedimentary rock composed of one or more minerals and accessory compounds, the whole usually being rich in hydrated silicates of aluminum, iron or magnesium, hydrated alumina, or iron oxide, predominating in particles of colloidal or near-colloidal size, and commonly developing plasticity when sufficiently pulverized and wetted." Kirk-Othmer, Encyclopedia of Chemical Technology, Volume 5, page 544, 2nd edition, John Wiley and Sons, Inc., New York, New York 1964.

The "montmorillonite" clays refer generically to crystalline clays having three layers. These clays are composed of units having two layers of silica tetrahedrons and one centrally disposed dioctahedral or trioctahedral layer. Such montmorillonite clays may be classified as either having an expanding lattice stucture or a nonexpanding lattice. The Encyclopedia of Chemistry, third edition, Van Nostrand Reinhold Co., New York, 1973.

The term "montmorillonite" has also been used to specify a species member of the "montmorillonite" genus: i.e., an aluminous member of the group accorded the empirical formula

$$(OH)_4Si_8(Al_{3.34}\underset{\substack{|\\ Na_{0.66}}}{Mg_{0.66}})O_{20}$$

Both bentonite and hectorite are members of the expanding lattice montmorillonite subgenus. One difference between the two is that in hectorite the aluminum present in the bentonite lattice is almost completely substituted by magnesium atoms. Another difference is that lithium and fluorine are absent from the bentonite lattice and present in the hectorite lattice. Bentonite may be characterized as a sodium aluminum silicate, with hectorite being a sodium magnesium-fluor-litho silicate.

The use of hectorite clay containing slurries in PSB applications is disclosed in US-A-4 504 395 and US-A-4 564 464, both of which are common assigned to the Applicant of the present application.

The present invention is generally applicable to the use of montmorillonite, bentonite, and/or hectorite clays. The only requirement is that, when added to the clay slurry, the polyacrylic acid (PAA) should increase the viscosity of the clay slurry. Preliminary results indicate that, if the clay slurry viscosity is not increased by the PAA addition, the treatment will exhibit significantly diminished detackification efficacy.

It is critical to the invention that the PAA be added to the clay (based upon the weight of clay) within the range of trace amounts to about 1% by weight. Addition above about 1% causes diminution of efficacy in desirable detackification and paint agglomeration characteristics.

As to the polyacrylic acid, the weight average molecular weight thereof desirably ranges from about 100,000 to about 2 to 3 million. When molecular weight exceeds the upper range limit, the clay-PAA mix is too viscous to be effectively slurried.

The clay-PAA slurry may be either shot fed or continuously fed to the paint spray booth water system, preferably in an amount of about 0.5 to 50% by weight of the non-aqueous slurry components based on the weight of oversprayed paint. Most preferably, the slurry is added to the system at a rate of from about 1 to 20% by weight of non-aqueous slurry components to weight of oversprayed paint (B.O.P.).

The slurry can be admitted to the paint spray booth system at varied locations including: the pump, upstream from pumps, or at any advantageous position along the circulating water system. Of course, the PAA-clay mix can be added to the paint spray booth water system as a dry mix with the water system providing the slurry vehicle.

At present, the preferred PAA-clay mix, ready to be slurried, contains the following components:

a. 50 weight % Bentonite Clay/Sodium Montmorilonite -"Bigh Horn" Chemical Grade Bentonite --sold by Wyo-Ben, Inc.

b. 50 weight % Bentonite Clay/Sodium Montmorillonite -"Red Devil" Gel Clay - sold by Wyo-Ben, Inc.

Based upon the preliminary analytical tests, it is thought that the "Red Devil" product contains 99.50% clay and 0.50% polyacrylic acid. Accordingly, the preferred mix supra., is though to comprise about 0.25% weight PAA (based on total clay-PAA mix). The molecular weight of the PAA component in the product is thought to be around 1 million.

In addition to use of the clay-PAA slurry as a detackifying treatment, paint sludge float enhancing flocculants (such as the quaternary ammonium polymers in general, specifically polydiallyldimethylammonium chloride, DADMAC) may be admitted to the PSB wash water so as to improve the floating characteristics of the agglomerated paint to facilitate easy separation thereof from the water. Such float enhancing agents may be added in an amount of 1-20 weight % float enhancer based upon weight of detackifier treatment. Some preliminary studies have indicated that DADMAC specifically may not perform optimally with the PAA-clay slurry treatment methods of the present invention. Further studies will need to be undertaken to determine which particular float enhancing flocculant will provide optimal results.

The following examples amply demonstrate that the compositions of the present invention may be successfully utilized in processes of the type which are directed toward the inhibition of pollution and/or contamination in paint spray booth systems. In these types of water wash systems, the water is used to wash air in the booth and to remove oversprayed paints, enamels or lacquers. Solids may be removed by conventional techniques via filters or the like. The water is normally recirculated so that it may once again perform its intended washing function. Upon treatment with the detackification compositions used in the present invention, the tackiness of the paints, enamels and lacquers is reduced and, therefore, to the extent that these paints, enamels and lacquers are not separated from the liquid phase, they exhibit less tendency to adhere to the integral parts of the pumps, mist eliminators or sump sidewalls of the spray booths. Further, the agglomeration function of the detackification compositions facilitates removal of these waste paint solids from the water so that relatively clean water can be recirculated in the system. Another important function of the treatment of the present invention is to reduce the volume of the resultant sludge.

The invention will now be further described with reference to a number of specific examples which are to be regarded solely as illustrative and not as restricting the scope of the invention.

## Clay Slurry Preparation

Samples of 5% clay slurries containing various levels of polymer (0.025 to 10% by weight of clay) were prepared. 190 grams of cold tap water were placed in a beaker. While stirring at 1000 rpm, 10 grams of clay were slowly added. The mixing was continued for 10 minutes. The required quantity of polymer was added to the slurry, and the mixing was continued for an additional 20 minutes. The clay slurry samples were allowed to sit for 24 hours before evaluation as paint detackifiers.

The polymer used for these tests was a partially neutralized acrylic acid/acrylamide copolymer having a molecular weight of about one million or greater. Under the test conditions, the acrylamide moieties likely hydrolyze, yielding substantially homopolymeric acrylic acid.

## Jar Actives Testing

The detackification performance of the clay slurries was evaluated by a standard jar test method. 97 milliliters of cold tap water was placed in a four ounce glass jar. Two milliliters of the 5% clay slurry was added to the water, the jar capped, and the jar shaken to disperse the clay. The jar ws opened, and one milliliter of paint was added. The jar was shaken for an additional 15 seconds.

The comparison of the paint detackification performance was conducted in a two step process. The first step was the visual comparison of the general flocculation (floc) characteristics. These characteristics may include floc size, ratio of float to sink, and foaminess. The second step was a tactile examination of a tongue depressor that had been inserted into the samples. This qualitative examination is usually rated in terms such as good, fair, poor, greasy, oily, or the like. The results of these tests are presented below.

Detackification of High Solids Light Blue Metallic Paint

| Polymer Level (% by weight of clay) | Detackification |
|---|---|
| 0.025 | Fair |
| 0.05 | Fair |
| 0.1 | Good |
| 0.5 | Good |
| 1.0 | Fair |
| 2.0 | Fair |
| 5.0 | Fair |
| 10.0 | Fair |
| Slurry A | Good |

Slurry A, the preferred composition supra., was also evaluated. Visually, the samples containing 0.1 and 0.5% polymer produced a nice floating floc with a clear supernate. Both at higher and lower polymer levels, the supernate was very cloudy. With polymer levels greater than 1.0%, increasing amounts of paint was observed to stick to the glass surface of the jars, and hence polymer addition at these levels was deemed unsuitable. Slurry A appeared to perform similarly to the 0.1 and 0.5% polymer samples consistent with our analysis that the preferred composition, supra., comprised about 0.25% polymer (based on weight of clay).

Although all samples were greasy, the greasiness increased with increasing polymer levels greater than 1.0%.

The above tests were also performed with a high solids red paint available from a western location automobile plant. High solids denotes a paint material wherein at least about 40 weight % or more is solids.

It should be noted that the detackification characteristics of the Big Horn Bentonite (see preferred composition, supra.) with no polymer addition was only fair at twice the clay level used in the above tests. Additionally, no detackification was observed for use of the polymer, by itself, at polymer addition levels equivalent to those reported in the above table.

Additionally, when an acrylic acid/acrylamide copolymer having a molecular weight of around 6,500 was incorporated into a clay slurry within the range of 0.025 to 10% (by weight of clay) unacceptable detackification resulted.

Additional Efficacy Tests

On a wide range of automotive paint types, slurry "A" of the present invention was contrasted in performance to a slurry comprising, as solids:

Comparative Treatment 55.0% hectorite clay
43.0% western bentonite clay
2.0% antifoam

In lab detackification tests, slurry "A" at a treatment level of 15 weight % (B.O.P. --based on weight of oversprayed paint) equalled the Comparative Treatment in detackification efficacy when the Comparative Treatment was used at 20 weight % B.O.P. The implications from these studies are that the slurry "A" materials are capable of providing satisfactory detackification at lower treatment dosages, which also should contribute to reduced volume sludge quantities.

Float/Sink Characteristics

At equal rates (slurry "A" vs. the "Comparative Treatment" supra.), slurry "A" tended to sink less than the comparative treatment. Jar test results were as follows:

| | % Sink | % Float |
|---|---|---|
| Comparative Treatment (20% B.O.P) | 90 | 10 |
| Slurry "A" (20% B.O.P.) | 85 | 15 |

However, when a DADMAC polymer was used conjointly with either slurry "A" or the Comparative Treatment, 100% of the resulting paint sludges, for both treatments, were floated.

Paint Sludge Floc Volume

Although float/sink characteristics for slurry "A" are similar to the Comparative Treatment's, floc volume measurements indicate significant difference in favor of slurry "A." The following table contains head-to-head comparisons with no other additives present.

| | Floc Volume (% B.O.P.) | Average Floc Volume (cm) |
|---|---|---|
| 1. Comparative Treatment | 20 | 2.57 ± 0.6 |
| 2. Slurry "A" | 20 | 0.85 ± 0.2 |
| 3. Slurry "A" | 15 | 0.75 ± 0.3 |

Predictably, with increasing feedrate, the floc volume increases as shown above.

Float Enhancing Polymer Effects on Floc Volume

When DADMAC polymer was used conjointly with slurry "A", very limited observations indicated that the DADMAC increased the floc volume of the slurry "A" sludge. This implies that DADMAC may not be right for slurry "A" or that the DADMAC feedrate needs adjustment. More studies are planned in this area.

Dewatering/Filtration/Sludge Density

From data on two high solids automotive paints, it was confirmed that slurry "A" provided a more manageable paint sludge than the comparative treatment. Again, some concerns were raised as the compatibility of slurry "A" with a polyDADMAC float enhancer.

| | Red Paint | | Blue Paint | |
|---|---|---|---|---|
| | Slurry A | CT | Slurry A | CT |
| | DADMAC | DADMAC | DADMAC | DADMAC |
| Filter Efficiency (calculated Hoffman efficiency) % | 53.50 | 45.42 | 14.0 | 54.70 |
| Sludge Volume CVS | | | | |
| $ft^3/gal$ | 0.68 | 2.29 | 1.12 | 1.43 |
| $m^2/l$ | $5.08x10^{-3}$ | $17.13x10^{-3}$ | $8.38x10^{-3}$ | $10.70x10^{-3}$ |
| Solids in Filter Cake, % Solids | 20.09 | 14.21 | 11.70 | 8.35 |

CT = Comparative Treatment

Comparable feedrates for slurry "A" and the Comparative Treatment were fed at 20% B.O.P. with DADMAC polymer being fed at 20 weight % B.O.T. (based on weight of slurry "A" treatment or the Compartive Treatment).

Slurry Makedown

Neither slurry "A" nor the Comparative Treatment wet out very well without significant agitation over a period of time. Slurry A concentrations above 7% (slurry "A":water) will not flow. A 5% slurry concentration may be an ideal slurry concentration for eductor systems, but the optimal slurry concentration needs further study.

Foaming Tendencies

Slurry "A" may have a slightly higher tendency to foam than the Comparative Treatment, particularly in the presence of a polyDADMAC float enhancing polymer.

**Claims**

1. A process for controlling pollution and contamination in paint, lacquer or enamel spray booths in which each wash water is used to wash air in the booth and to remove oversprayed paints, enamels or lacquers, the water being recirculated for further use in washing the air in the spray booths, which comprises adding to the water an effective amount for the purpose of a detackifying composition comprising a clay material and an effective amount of a polyacrylic acid polymer or water soluble salt form thereof, the amount being sufficient to reduce the tackiness of the paints, enamels and lacquers and to thereby reduce the tendency of oversprayed paints, enamels and lacquers to adhere to pump parts, mist eliminators, or sump sidewalls of the spray booths, the composition being effective to condition paint, enamel and lacquer solids so as to facilitate removal of said solids from said water, the polyacrylic acid or water soluble salt form thereof being present in an amount of up to about 1 weight %, based upon the weight of the clay.

2. A process according to claim 1, wherein the polyacrylic acid or water soluble salt form thereof has a weight average molecular weight of from about 100,000 to about 2 to 3 million.

3. A process according to claim 2, wherein the molecular weight of the polyacrylic acid or water soluble salt form thereof is about 1 million.

4. A process according to any of claims 1 to 3, wherein the polyacrylic acid or water soluble salt form thereof is present in an amount of about 0.25 weight %, based upon the weight of clay.

5. A process according to any of claims 1 to 4, wherein a slurry comprising the clay and the polyacrylic acid or water soluble salt form thereof is added to the wash water.

6. A process according to any of claims 1 to 5, wherein the clay material is selected from bentonite, hectorite, and montmorillonite clays and mixtures thereof.

7. A process according to any of claims 1 to 6, wherein the detackifying composition is added to the wash water in an amount of 0.5 to 50 weight % based upon the weight of the oversprayed paint, enamel, or lacquer.

8. A process according to claim 7, wherein the detackifying composition is added to the wash water in an amount of from about 1 to 20 weight % based upon the weight of the oversprayed paint, enamel, or lacquer.

European Patent Office

# EUROPEAN SEARCH REPORT

Application Number

EP 88 30 1109

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| D,A | US-A-4 564 464 (HARPEL et al.)<br>* Claim 1 *<br>--- | 1,5,6 | B 05 D 1/02 |
| A | CHEMICAL ABSTRACTS, vol. 70, no. 10, 10th March 1969, page 290, no. 41099c, Columbus, Ohio, US; L.T. PRILIPKO et al.: "Determination of the optimum concentrations for flocculating bentonite suspensions by polyacrylamide by the triangular diagram method" & PISHCH. PROM. (KIEV) 1967, 5, 93-6<br>* Abstract *<br>--- | 1 | |
| A | DE-A-1 642 853 (METALLGESELLSCHAFT A.G.)<br>* Claims 1,2 *<br>--- | 1 | |
| D,A | US-A-3 515 575 (R.F. ARNOLD)<br>* Claims 1,2,3 *<br>----- | 1,2 | TECHNICAL FIELDS SEARCHED (Int. Cl.4)<br>B 05 D<br>B 05 B |

The present search report has been drawn up for all claims

| Place of search | Date of completion of the search | Examiner |
|---|---|---|
| THE HAGUE | 03-05-1988 | MCCONNELL C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document